# EUROPÄISCHE PATENTSCHRIFT

(11) **EP 2 135 720 B1**
(45) Veröffentlichungstag und Bekanntmachung des Hinweises auf die Patenterteilung: **07.12.2011**
(21) Anmeldenummer: 08158676.0
(22) Anmeldetag: 20.06.2008
(51) Int. Cl.: B27D 5/00, B23C 3/12

(54) **Tasteinrichtung zum Abtasten eines Werkstücks und Bearbeitungseinheit mit einer solchen Tasteinrichtung**
Feeler device for a workpiece and processing unit including such a device
Palpeur pour pièce à usiner et unité de traitement dotée de ce dispositif

(43) Veröffentlichungstag der Anmeldung: 23.12.2009
(73) Patentinhaber: Homag Holzbearbeitungssysteme AG, 72296 Schopfloch (DE)
(72) Erfinder: Kalmbach, Wilhelm, 72296 Schopfloch (DE)
(74) Vertreter: HOFFMANN EITLE

(56) Entgegenhaltungen:
- DE-U- 7 315 666
- DE-U1-202007 005 499

## Beschreibung

Die vorliegende Erfindung betrifft eine Tasteinrichtung zum Abtasten eines Werkstücks gemäß dem Oberbegriff des Patentanspruchs 1 sowie eine Bearbeitungseinheit mit einer solchen Tasteinrichtung.

Eine solche Tasteinrichtung ist aus DE 73156664 bekannt

Solche Tasteinrichtungen finden insbesondere während der Bearbeitung der Seitenflächen oder Kanten von Werkstücken Anwendung. Ein konkretes Anwendungsbeispiel ist das Formfräsen von Werkstückkanten, wobei die Werkstückkante mit einem Radius oder einer Fase versehen wird. Hierbei kann entweder die Kante eines massiven Werkstücks selbst bearbeitet werden oder auch ein Kantenmaterial, welches auf die Seitenflächen des Werkstücks aufgebracht worden ist. Als weiteres Anwendungsbeispiel sei das Bündigfräsen eines solchen Kantenmaterials genannt.

Die Lage des hierzu verwendeten Fräswerkzeugs zum Kantenrand wird durch Tastelemente bestimmt. Während der Bearbeitung der Kante werden diese Tastelemente an der Oberseite des Werkstücks und/oder an der Seitenfläche des Werkstücks, an der sich die zu bearbeitende Kante befindet, entlang-bewegt. Dabei sind sie mechanisch mit dem Fräswerkzeug verbunden, damit das Fräswerkzeug den von den Tastelementen erfassten Werkstückunebenheiten nachfolgen und die Bearbeitung der Kanten entsprechend exakt ausführen kann.

Die vorliegende Erfindung betrifft außerdem eine Bearbeitungseinheit zum Bearbeiten von Werkstücken, die eine solche Tasteinrichtung verwendet.

### Stand der Technik

Tasteinrichtungen der eingangs genannten Art sind in verschiedenen Ausgestaltungen bekannt.

Das Abtasten der Seitenfläche des Werkstücks während der Bearbeitung der Kante geschieht beim Formfräsen oft mit einem nicht rotierenden Tastschuh, der an der abzutastenden Seitenfläche entlang gleitet.

Gemäß DE 20 2006 006 244 U1 sind beispielsweise zwei Tastschuhe vorgesehen, die beide eine translatorische Relativbewegung zu der zu bearbeitenden Werkstückkante ausführen; ein Tastschuh gleitet auf der Oberseite, der andere auf der Seitenfläche des Werkstücks.

Insbesondere bei der Bearbeitung von empfindlichen Kunststoffkanten oder Aluminiumkanten kann es dadurch jedoch zu Beschädigungen der Kanten, insbesondere durch Verkratzen, kommen. Bei Kunststoffkanten mit Schutzfolie kommt es vor, dass diese Folie durch den Kontakt mit dem Tastschuh teilweise abgezogen wird.

Es ist daher bereits in Betracht gezogen worden, rotierende Tastelemente zu verwenden, die während der Bearbeitung der Kanten an den Seitenflächen der Werkstücke abrollen. So offenbart DE 14 54 906 eine Tasteinrichtung mit zwei Tastrollen, von denen eine nachgiebig gegen die Seitenfläche, die andere in unmittelbarer Nähe der Seitenfläche gegen die Ober- oder Unterseite des Werkstücks anliegt. Die Drehachsen der beiden Tastrollen verlaufen hier senkrecht zueinander.

Aus DE 37 32 810 C1, die den nächstkommenden Stand der Technik bildet, ist eine Tasteinrichtung gemäß dem Oberbegriff des Patentanspruchs 1 bekannt. Die Lage der Werkzeuganordnung zum Kantenrand wird hier durch zwei Tastelemente gesteuert. Das eine Tastelement ist als Tastrolle ausgebildet, die auf der Oberseite des Werkstücks abrollt. Auf der Seitenfläche des Werkstücks stützt sich das zweite Tastelement ab, das die Form einer Tastscheibe hat. Die beiden Tastelemente sind an zwei verschiedenen Armen einer Grundplatte einer Bearbeitungseinheit gelagert.

### Darstellung der Erfindung

Es ist die Aufgabe der vorliegenden Erfindung, eine Tasteinrichtung zum Abtasten eines Werkstücks während der Bearbeitung einer an einer ersten Fläche eines Werkstücks vorgesehenen Kante der eingangs genannten Art zu schaffen, die eine genaue Führung eines zur Bearbeitung der Kante eingesetzten Werkzeugs ermöglicht, sowie eine zugehörige Bearbeitungseinheit.

Diese Aufgabe wird durch eine Tasteinrichtung gemäß dem Patentanspruch 1 und eine Bearbeitungseinheit gemäß dem Patentanspruch 10 gelöst.

Demzufolge beinhaltet die Tasteinrichtung eine Tastscheibe, die während der Bearbeitung der Kante an der ersten Fläche, insbesondere der Seitenfläche, des Werkstücks entlang beweglich ist und eine Tastfläche aufweist, die dabei Kontakt mit der ersten Fläche des Werkstücks hält, während sie eine Rotationsbewegung relativ zu der ersten Fläche des Werkstücks ausführt. Erfindungsgemäß erfolgt die Rotationsbewegung der Tastfläche relativ zu der ersten Fläche des Werkstücks um eine Drehachse herum, die im wesentlichen rechtwinklig zur ersten Fläche des Werkstücks verläuft.

Diese Ausgestaltung bietet den wesentlichen Vorteil, dass die die Tastscheibe in unmittelbarer Umgebung des Werkzeugs vorgesehen sein kann und das Werkzeug den von der Tastscheibe erfassten Werkstückunebenheiten unmittelbar nachfolgen und die Bearbeitung der Kanten entsprechend exakt ausführen kann.

Darüber hinaus kann die Bearbeitungseinheit, die die Tasteinrichtung beinhaltet, kompakt ausgestaltet werden.

Schließlich können auch bestehende Bearbeitungseinheiten auf einfache Art und Weise mit einer erfindungsgemäßen Tasteinrichtung nachgerüstet werden, ohne dass ein zusätzlicher Platzbedarf bestünde.

Vorteilhafte Weiterbildungen sind in den abhängigen Patentansprüchen beschrieben.

So ist die Tastfläche vorzugsweise an einer Stirnseite der Tastscheibe ausgebildet, welche Stirnseite im Betrieb im wesentlichen parallel zu der ersten Fläche (Seitenfläche) des Werkstücks angeordnet ist. Die Tastfläche kann dabei als ringförmige Planfläche ausgebildet sein.

Wenn die Tastfläche rundum mit einer Anlaufschräge versehen ist, auf die das abzutastende Werkstück aufläuft, können Stöße und Schläge beim Inkontaktbringen der Tastscheibe mit dem Werkstück vermieden oder zumindest stark reduziert werden.

Die Tastfläche der Tastscheibe ist vorzugsweise so ausgestaltet und gelagert, dass sie durch die Anpresskraft gedreht wird, mit der sie während der Bearbeitung der Kante gegen die erste Fläche des Werkstücks gepresst wird. Durch die so entstehende relative Rotationsbewegung der Tastfläche bezüglich der ersten Fläche des Werkstücks werden Beschädigungen dieser ersten Fläche, verglichen mit einer reinen Gleitbewegung der Tastfläche an der ersten Fläche entlang, verringert.

In an sich bekannter Art und Weise kann die Tasteinrichtung außerdem Mittel zum Abtasten einer zweiten Fläche des Werkstücks während der Bearbeitung der Kante aufweisen. Diese zweite Fläche bildet einen Winkel mit der ersten Fläche und schließt sich vorzugsweise so an die erste Fläche an, dass die zu bearbeitende Kante diese beiden Flächen verbindet. Insbesondere kann es sich bei der zweiten Fläche um die Oberseite des Werkstücks handeln. Unter "Oberseite" des Werkstücks ist dabei sowohl die während der Bearbeitung oben liegende als auch die während der Bearbeitung unten liegende Seite des Werkstücks zu verstehen.

Insbesondere bei schnelleren Durchlaufgeschwindigkeiten kann es vorteilhaft sein, ein Tastelement vorzusehen, das die zweite Fläche des Werkstücks berührungslos abtastet. Solche berührungslosen Tastelemente reagieren im allgemeinen schneller als mechanische Tastelemente. Insbesondere kann ein optischer Sensor vorgesehen sein, der in an sich bekannter Art und Weise auf die Werkstückoberfläche einen Lichtpunkt projiziert, dessen Lage von einem optischen System unter einem vom Lichtstrahl abweichenden Winkel erfasst wird. Ein wesentlicher Vorteil solcher berührungsloser Tastelemente ist, dass die Werkstückoberfläche beim Abtasten nicht beschädigt wird.

Zumindest ein Tastelement zum Abtasten der zweiten Fläche (Oberseite) des Werkstücks kann aber auch als Tastrolle ausgebildet sein, die auf der zweiten Fläche des Werkstücks abrollt, wenn die Tasteinrichtung an der ersten Fläche des Werkstücks entlang bewegt wird. In dieser Ausgestaltung ergibt sich aufgrund der erfindungsgemäßen Anordnung der Tastscheibe die Möglichkeit, die Drehachse der Tastrolle parallel zur Drehachse der Tastscheibe anzuordnen oder die Tastrolle und die Tastscheibe sogar konzentrisch zueinander vorzusehen. In beiden Fällen ist die Ausgestaltung der Tasteinrichtung recht kompakt, insbesondere verglichen mit der herkömmlichen Anordnung zweier Tastrollen mit zueinander rechtwinkligen Drehachsen.

Das Tastelement zum Abtasten der zweiten Fläche (Oberseite) des Werkstücks kann aber grundsätzlich auch jede andere an sich bekannte Ausgestaltung haben.

Die erfindungsgemäße Bearbeitungseinheit dient zum Bearbeiten von Werkstücken, die bevorzugt zumindest teilweise aus Holz, Holzwerkstoffen oder Kunststoff bestehen. Ebenso denkbar sind jedoch Werkstücke aus anderen Materialien; als Beispiele seien Metalle wie Aluminium oder Stahl genannt.

Die Bearbeitungseinheit dient insbesondere zum Formfräsen von Kanten, beispielsweise angeleimten Kanten in einer Kantenanleimmaschine. Je nach Art des verwendeten Werkzeugs sind aber auch verschiedene andere Bearbeitungsvorgänge denkbar, bei denen die Bearbeitungseinheit relativ zur Werkstückkante bewegt wird. In jedem Fall weist die Bearbeitungseinheit eine Tasteinrichtung mit der oben beschriebenen erfindungsgemäßen Ausgestaltung auf, außerdem vorzugsweise zumindest ein Werkzeug zur spanenden Bearbeitung der Werkstückkante, insbesondere ein Fräswerkzeug zum Formfräsen der Werkstückkante.

Zumindest eines der vorgesehenen Werkzeuge rotiert dabei vorzugsweise um eine Drehachse, die parallel zur Drehachse der Tastscheibe verläuft.-Wenn die Tasteinrichtung die oben beschriebene Tastrolle aufweist, verläuft die Drehachse des Werkzeugs vorzugsweise auch parallel zur Drehachse der Tastrolle. Diese Ausgestaltung trägt zur angestrebten kompakten Ausgestaltung der Bearbeitungseinheit bei und stellt außerdem sicher, dass das Werkzeug mittels der Tastscheibe (und ggf. Tastrolle) korrekt geführt wird. In einer Weiterbildung kann das Werkzeug um dieselbe Drehachse rotieren wie die Tastscheibe und/oder Tastrolle.

Insbesondere zum Formfräsen von Werkstückkanten ist es vorteilhaft, wenn die Bearbeitungseinheit die erste Fläche (Seitenfläche) des Werkstücks zur Bearbeitung der Kante vollständig umfahren kann. So ist es möglich, die Kante in einem Arbeitsgang an ihrer Ober- und Unterseite und auch der vorderen und hinteren Stirnseite des Werkstücks zur Werkstückfläche in Form zu fräsen.

Das vollständige Umfahren der ersten Fläche oder Seitenfläche kann beispielsweise dadurch ermöglicht werden, dass die Bearbeitungseinheit insgesamt um eine Achse (die sog. C-Achse) herum verschwenkbar gelagert ist, die parallel zur Drehachse des Werkzeugs verläuft. Anschließend an die Bearbeitung der oben liegenden Werkstückkante kann die Bearbeitungseinheit dann um 180° verdreht werden, um die unten liegende Werkstückkante zu bearbeiten.

Die erfindungsgemäße Bearbeitungseinheit kann sowohl in Durchlaufbearbeitungsmaschinen (insbesondere Kantenanleimmaschine) eingesetzt werden als auch in stationären Bearbeitungsmaschinen. In Durchlaufbearbeitungsmaschinen wird das zu bearbeitende Werkstück mit im wesentlichen konstanter Geschwindigkeit an der Bearbeitungseinheit vorbeigeführt, um die Werkstückkante zu bearbeiten, insbesondere formzufräsen. In stationären Bearbeitungsmaschinen wird das Werkstück dagegen fest aufgespannt und das Werkzeug relativ zum Werkstück bewegt, um die Kanten zu bearbeiten.

In beiden Fällen ist die Bearbeitungseinheit aber zumindest in einer Richtung (der Z-Richtung) vertikal aufwärts und abwärts verfahrbar.

Im Falle einer stationären Bearbeitungsmaschine ist die Bearbeitungseinheit darüber hinaus in zumindest einer Richtung (der X- und/oder der Y-Richtung) verfahrbar, die im Betrieb parallel zur Werkstückoberfläche verläuft.

### Kurze Beschreibung der Zeichnung

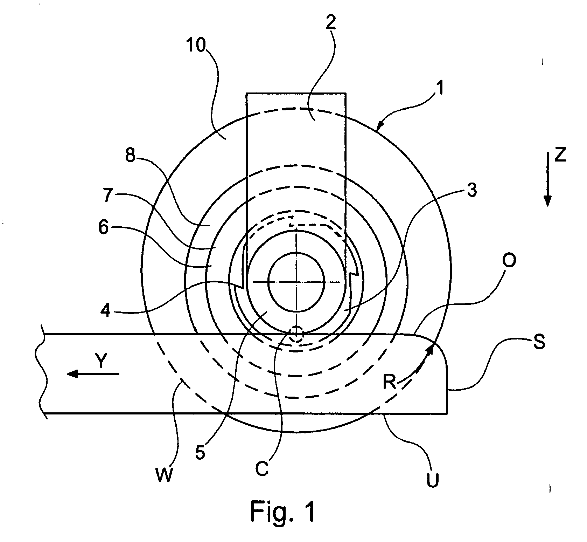

Die Fig. 1 zeigt eine erfindungsgemäße Bearbeitungseinheit.

Ausführliche Beschreibung einer Ausführungsform der Erfindung

Eine bevorzugte Ausführungsform der Erfindung wird nun mit Bezug auf die anliegenden Zeichnungen genauer beschrieben.

Fig. 1 zeigt eine bevorzugte Ausführungsform einer Bearbeitungseinheit 1 zum Formfräsen von Werkstückkanten, die eine erfindungsgemäße Tasteinrichtung verwendet.

Die Bearbeitungseinheit 1 ist Teil einer hier nicht eigens dargestellten Bearbeitungsmaschine, bei der es sich, wie bereits erwähnt, entweder um eine Durchlaufbearbeitungsmaschine handeln kann oder um eine stationäre Bearbeitungsmaschine. Auf diese beiden Varianten wird im folgenden noch genauer eingegangen.

In jedem Fall weist die Bearbeitungseinheit ein Gehäuse auf, von dem in der Zeichnung ein Teil dargestellt ist, der im folgenden als Grundkörper 2 bezeichnet wird. Dieser Grundkörper 2 der Bearbeitungseinheit 1 ist über ein Formfräsaggregat an der Bearbeitungsmaschine fixiert.

Die dargestellte Bearbeitungseinheit 1 weist außerdem ein Fräswerkzeug 3 auf, das an dem Gehäuse der Bearbeitungseinheit 1 drehbar gelagert ist und mehrere um seinen Umfang herum verteilte Schneiden 4 aufweist.

Ebenfalls dargestellt ist ein Teil eines zu bearbeitenden plattenförmigen Werkstücks W. An der dem Betrachter abgewandten Seitenfläche (Schmalfläche) des Werkstücks ist eine Kante angeleimt, die mittels der Bearbeitungseinheit 1 in Form gefräst, d.h. beispielsweise mit einem Radius oder einer Kante versehen wird.

Die Bearbeitungseinheit 1 ist mit zwei Tastelementen versehen, die die Positionsfestlegung der Schneiden 4 zum Werkstück W erleichtern. So ist einerseits eine Tastrolle 5 vorgesehen, die an dem Grundkörper 2 drehbar gelagert ist und während der Bearbeitung der Kante auf der Oberseite des Werkstücks W abrollt.

Das zweite Tastelement, das die dem Betrachter abgewandte Seitenfläche des Werkstücks W abtastet, ist erfindungsgemäß als Tastscheibe 6 ausgebildet. Die Tastscheibe 6 ist ihrerseits über Wälzlager drehbar in einer Lagerschale oder Tastscheibenaufnahme 10 gelagert. Sie hat an ihrer Stirnseite eine ringförmige Planfläche 7, die, wenn die Bearbeitungseinheit 1 relativ zu der Seitenfläche des Werkstücks W in Längsrichtung des Werkstücks W bewegt wird, eine Rotationsbewegung ausführt. Zu dieser Rotationsbewegung wird die Tastscheibe 6 über die Anpresskraft, mit der sie während der Bearbeitung der Kante gegen die Seitenfläche des Werkstücks gepresst wird, angetrieben.

In der dargestellten Ausführungsform fallen die Drehachsen der Tastrolle 5, der Tastscheibe 6 und des Fräswerkzeugs 3 zusammen. Ebenso gut ist es aber beispielsweise möglich, dass die Tastscheibe 6 und das Fräswerkzeug 3 um dieselbe Drehachse rotieren und die Tastrolle 5 um eine dazu parallele Drehachse.

Da die Drehachse der Tastscheibe 6 senkrecht zur Seitenfläche des Werkstücks W verläuft und die Planfläche 7 der Tastscheibe 6 gegen die Seitenfläche des Werkstücks W anliegt, entspricht die Relativbewegung zwischen Planfläche 7 und Werkstückseitenfläche zwar nicht einer reinen Abrollbewegung. Durch die Rotation der Tastscheibe 6 wird jedoch - verglichen mit einem reinen Gleiten der Planfläche an der Seitenfläche entlang - die Reibung zwischen Tastscheibe 6 und Werkstückseitenfläche vermindert, so dass eine Beschädigung der Seitenfläche verhindert wird, was insbesondere bei der Bearbeitung von empfindlichen Kanten von Vorteil ist.

Die Planfläche 7 ist rundum mit einer Anlaufschräge 8 versehen, auf die das Werkstück W aufläuft.

Die Bezugsziffer 9 bezeichnet eine Spanabführung.

Aus den Figuren 1 bis 4 ergibt sich, wie die Bearbeitungseinheit an der Seitenfläche des Werkstücks W entlang bewegt wird.

In Figur 1 ist die Bearbeitungseinheit 1 beim Formfräsen der Kante an der dem Betrachter abgewandten Seitenfläche des Werkstücks W dargestellt. Während dieses Vorgangs findet eine Relativbewegung des Werkstücks W bezüglich der Bearbeitungseinheit 1 nach links in der Zeichnung statt. Die Bewegungsrichtung des Werkstücks W ist in der Zeichnung mit Y gekennzeichnet. Die Tastrolle 5 rollt dabei auf der Oberseite O des Werkstücks W ab. Die Planfläche 7 der Tastscheibe 6 hält Kontakt mit der Seitenfläche des Werkstücks W und rotiert relativ zu dieser Seitenfläche.

Wenn die Bearbeitungseinheit 1 in der Bearbeitungsrichtung Y am Ende des Werkstücks W angekommen ist, rollt die Tastrolle 5 weiter auf der Werkstückoberseite O ab und bewegt sich entsprechend an einem an der Stirnfläche S des Werkstücks W ausgebildeten Radius R entlang. So wird auch dort die Kante mittels des Fräswerkzeugs 3 in Form gefräst. Dabei erfolgt eine Bewegung der gesamten Bearbeitungseinheit 1 bezüglich des Werkstücks W nach unten. Diese Richtung ist in der Zeichnung mit "Z" gekennzeichnet. Die Tastscheibe 6 hält nach wie vor Kontakt mit der dem Betrachter abgewandten Seitenfläche des Werkstücks.

Die Bearbeitungseinheit 1 bewegt sich in der Z-Richtung bezüglich des Werkstücks W weiter nach unten, bis die Bearbeitung der Kante an der Stirnfläche S des Werkstücks W abgeschlossen ist.

Die zweite Stirnfläche des Werkstücks W (nicht dargestellt) kann in gleicher Art und Weise bearbeitet werden, indem Werkstück W und Bearbeitungseinheit 1 in Y- und Z-Richtung entsprechend relativ zueinander bewegt werden.

Zur Relativbewegung zwischen Werkstück W und Werkzeug 3 ist die Bearbeitungseinheit 1 vorzugsweise zumindest in der Z-Richtung verfahrbar.

Im Falle einer Durchlaufbearbeitungsmaschine wird das Werkstück W an der Bearbeitungseinheit 1 in Y-Richtung entlang bewegt. Im Falle einer stationären Bearbeitungsmaschine, beispielsweise einer programmgesteuerten Maschine wie einer CNC-Fräse, ist die Bearbeitungseinheit 1 dagegen auch in Y-Richtung verfahrbar, während das Werkstück W fest aufgespannt wird.

Im letztgenannten Fall ist es nun auch möglich, die zu bearbeitende Seitenfläche des Werkstücks W mit der Bearbeitungseinheit 1 einmal vollständig zu umfahren. Hierzu ist die Bearbeitungseinheit 1 mit ihrem Grundkörper 2 um eine Achse C herum verschwenkbar in der Bearbeitungsmaschine gelagert. Anschließend an die eben beschriebene Bearbeitung der Stirnfläche des Werkstücks wird die Bearbeitungseinheit 1 dann insgesamt um 180° um diese Achse C herum verschwenkt und die Tastrolle 5 gegen die Unterseite U des Werkstücks in Anlage gebracht. Die Achse C verläuft ebenfalls parallel zu den Drehachsen der Tastrolle 5, der Tastscheibe 6 und des Fräswerkzeugs 3.

Die Achse C verläuft in der vorliegenden Ausführungsform im Bereich der Stelle, an der die Tastrolle 5 auf der Oberseite 0, U des Werkstücks aufliegt. Die Achse C kann im Grunde aber an einer beliebigen Position der Bearbeitungseinheit 1 vorgesehen sein, solange der eben beschriebene Verschwenkvorgang möglich ist.

Der Vollständigkeit halber sei noch darauf hingewiesen, dass die eben beschriebene Bearbeitungseinheit auch um 90° verschwenkt zum Bearbeiten der Werkstückkante eingesetzt werden kann. In diesem Fall würde die Tastrolle 5 auf der Seitenfläche des Werkstücks abrollen und die Tastscheibe 6 an der Ober- bzw. Unterseite des Werkstücks entlang geführt.

Zusammenfassend lässt sich feststellen, dass durch die erfindungsgemäße Anordnung von Tastrolle 5, Tastscheibe 6 und Fräswerkzeug 3 eine recht kompakte Bearbeitungseinheit 1 entstanden ist, in der das Fräswerkzeug 3 räumlich sehr eng mit sowohl der Tastrolle 5 als auch der Tastscheibe 6 in Verbindung steht und so durch diese beiden Tastelemente exakt geführt werden kann.

Die Erfindung ist nicht auf die beschriebene Ausführungsform beschränkt, sondern kann auf verschiedene Art und Weise innerhalb des Bereichs der anliegenden Ansprüche modifiziert werden.

## Patentansprüche

1. Tasteinrichtung zum Abtasten eines Werkstücks (W), das bevorzugt zumindest teilweise aus Holz, Holzwerkstoffen oder Kunststoff besteht, während der Bearbeitung einer an einer ersten Fläche, insbesondere einer Seitenfläche, des Werkstücks (W) vorgesehenen Kante,
wobei die Tasteinrichtung eine Tastscheibe (6) beinhaltet, die während der Bearbeitung der Kante an der ersten Fläche des Werkstücks (W) entlang beweglich ist und eine Tastfläche aufweist, die dabei Kontakt mit der ersten Fläche des Werkstücks (W) hält, während sie eine Rotationsbewegung relativ zu der ersten Fläche des Werkstücks (W) ausführt,
**dadurch gekennzeichnet, dass**
die Rotationsbewegung der Tastfläche (7) relativ zu der ersten Fläche des Werkstücks (W) um eine Drehachse herum erfolgt, die im wesentlichen rechtwinklig zur ersten Fläche des Werkstücks (W) verläuft.

2. Tasteinrichtung nach Patentanspruch 1, bei welcher die Tastfläche (7) an einer Stirnseite der Tastscheibe (6) ausgebildet ist, welche Stirnseite im Betrieb im wesentlichen parallel zu der ersten Fläche des Werkstücks (W) angeordnet ist.

3. Tasteinrichtung nach Patentanspruch 1 oder 2, bei welcher die Tastfläche (7) als ringförmige Planfläche ausgebildet ist.

4. Tasteinrichtung nach einem der vorangehenden Patentansprüche, bei welcher die Tastfläche (7) rundum mit einer Anlaufschräge (8) versehen ist, auf die das abzutastende Werkstück (W) aufläuft.

5. Tasteinrichtung nach einem der vorangehenden Patentansprüche, bei welcher die Tastfläche (7) so ausgestaltet und gelagert ist, dass sie durch die Anpresskraft gedreht wird, mit der sie während der Bearbeitung der Kante gegen die erste Fläche des Werkstücks (W) gepresst wird.

6. Tasteinrichtung nach einem der vorangehenden Patentansprüche, die außerdem Mittel zum Abtasten einer zweiten Fläche (O, U), insbesondere der Oberseite, des Werkstücks (W) während der Bearbeitung der Kante aufweist.

7. Tasteinrichtung nach Patentanspruch 6, welche Mittel zum berührungslosen Abtasten der zweiten Fläche (O, U) des Werkstücks (W) während der Bearbeitung der Kante aufweist.

8. Tasteinrichtung nach Patentanspruch 6, bei welcher zumindest ein Tastelement zum Abtasten der zweiten Fläche des Werkstücks (W) als Tastrolle (5) ausgebildet ist, die auf der zweiten Fläche des Werkstücks (W) abrollt, wenn die Tasteinrichtung an der ersten Fläche des Werkstücks (W) entlang bewegt wird.

9. Tasteinrichtung nach Patentanspruch 8, bei welcher eine Drehachse der Tastrolle (5) parallel zur Drehachse der Tastscheibe (6) verläuft; oder bei welcher die Tastrolle (5) und die Tastscheibe (6) konzentrisch angeordnet sind.

10. Bearbeitungseinheit (1) zum Bearbeiten-von Werkstücken, die bevorzugt zumindest teilweise aus Holz, Holzwerkstoffen oder Kunststoff bestehen, insbesondere zum Formfräsen von angeleimten Kanten in einer Kantenanleimmaschine,
wobei die Bearbeitungseinheit (1) relativ zu einer an einer ersten Fläche, insbesondere einer Seitenfläche, des Werkstücks (W) vorgesehenen Kante verschiebbar gelagert ist,
und wobei die Bearbeitungseinheit (1) eine Tasteinrichtung gemäß einem der vorangehenden Patentansprüche aufweist.

11. Bearbeitungseinheit (1) gemäß Patentanspruch 10, die außerdem zumindest ein Werkzeug (3) zur spanenden Bearbeitung der Werkstückkante, insbesondere ein Fräswerkzeug zum Formfräsen der Werkstückkante, aufweist.

12. Bearbeitungseinheit (1) gemäß Patentanspruch 11, bei welcher zumindest ein Werkzeug (3) um eine Drehachse rotiert, die parallel zur Drehachse der Tastscheibe (6) und/oder parallel zur Drehachse der Tastrolle (5) verläuft; oder bei welcher zumindest ein Werkzeug (3) um dieselbe Drehachse rotiert wie die Tastscheibe (6) und/oder die Tastrolle (5).

13. Bearbeitungseinheit (1) gemäß einem der Patentansprüche 10 bis 12, welche so beweglich gelagert ist, dass sie die erste Fläche des Werkstücks (W) zur Bearbeitung der Kante vollständig umfahren kann.

14. Bearbeitungseinheit (1) gemäß einem der Patentansprüche 11 bis 13, die insgesamt um eine Achse (C) herum verschwenkbar gelagert ist, die parallel zur Drehachse des Werkzeugs (3) verläuft.

15. Bearbeitungseinheit (1) gemäß einem der Patentansprüche 10 bis 14, welche zumindest in einer Richtung (Z) verfahrbar ist, die im Betrieb senkrecht zur zweiten Fläche (0, U) des Werkstücks verläuft; und/oder welche in zumindest einer Richtung (X, Y) verfahrbar ist, die im Betrieb parallel zur zweiten Fläche (0, U) des Werkstücks verläuft.

## Claims

1. Sensing device for scanning a workpiece (W), which preferably consists at least partly of wood, derived timber products or plastic, during machining of an edge provided on a first surface, in particular a side surface, of the workpiece (W), wherein the sensing device contains a sensing disc (6) which can be moved along the first surface of the workpiece (W) during machining of the edge and has a sensing surface which thus maintains contact with the first surface of the workpiece (W) while it executes a rotational movement relative to the first surface of the workpiece (W), **characterised in that** the rotational movement of the sensing surface (7) relative to the first surface of the workpiece (W) is effected about an axis of rotation which runs essentially at right-angles to the first surface of the workpiece (W).

2. Sensing device according to patent claim 1, in which the sensing surface (7) is formed on one end-face side of the sensing disc (6), which end-face side in operation is arranged essentially parallel to the first surface of the workpiece (W).

3. Sensing device according to patent claim 1 or 2, in which the sensing surface (7) is designed as an annular plane surface.

4. Sensing device according to one of the preceding patent claims, in which the sensing surface (7) is provided all around with a transition slope (8), onto which the workpiece (W) to be scanned runs.

5. Sensing device according to one of the preceding patent claims, in which the sensing surface (7) is designed and mounted so that it is rotated by the contact pressure, with which it is pressed against the first surface of the workpiece (W) during machining of the edge.

6. Sensing device according to one of the preceding patent claims, which additionally has means for scanning a second surface (O, U), in particular the upper side, of the workpiece (W) during machining of the edge.

7. Sensing device according to patent claim 6, which has means for contact-free scanning of the second surface (O, U) of the workpiece (W) during machining of the edge.

8. Sensing device according to patent claim 6, in which at least one sensing element for scanning the second surface of the workpiece (W) is designed as a sensing roller (5) which rolls on the second surface of the workpiece (W) when the sensing device is moved along the first surface of the workpiece (W).

9. Sensing device according to patent claim 8, in which an axis of rotation of the sensing roller (5) runs parallel to the axis of rotation of the sensing disc (6); or in which the sensing roller (5) and the sensing disc (6) are arranged concentrically.

10. Machining unit (1) for machining workpieces, which preferably consist at least partly of wood, derived timber products or plastic, in particular for profile cutting of glued edges in an edge-gluing machine, wherein the machining unit (1) is mounted to be displaceable relative to an edge provided on a first surface, in particular a side surface, of the workpiece (W), and wherein the machining unit (1) has a sensing device according to one of the preceding patent claims.

11. Machining unit (1) according to patent claim 10, which additionally has at least one tool (3) for cutting machining of the workpiece edge, in particular a milling cutter for profile cutting of the workpiece edge.

12. Machining unit (1) according to patent claim 11, in which at least one tool (3) rotates about an axis of rotation which runs parallel to the axis of rotation of the sensing disc (6) and/or parallel to the axis of rotation of the sensing roller (5); or in which at least one tool (3) rotates about the same axis of rotation as the sensing disc (6) and/or the sensing roller (5).

13. Machining unit (1) according to one of patent claims 10 to 12, which is mounted to be movable so that it may travel the first surface of the workpiece (W) completely to machine the edge.

14. Machining unit (1) according to one of patent claims 11 to 13, which is mounted to be pivotable on the whole about an axis (C) which runs parallel to the axis of rotation of the tool (3).

15. Machining unit (1) according to one of patent claims 10 to 14, which can be moved at least in one direction (Z) which in operation runs vertically to the second surface (O, U) of the workpiece; and/or which can be moved in at least one direction (X, Y) which in operation runs parallel to the second surface (O, U) of the workpiece.

## Revendications

1. Dispositif palpeur pour palper une pièce à oeuvrer (W), constituée de préférence au moins partiellement en bois, en matériau à base de bois ou en matière plastique, pendant l'usinage d'une arête prévue au niveau d'une première surface, en particulier d'une surface latérale, de la pièce à oeuvrer (W),
dans lequel le dispositif palpeur contient une plaque de palpage (6) qui, pendant l'usinage de l'arête, est déplaçable le long de la première surface de la pièce à oeuvrer (W) et comporte une surface de palpage qui maintient ici un contact avec la première surface de la pièce à oeuvrer (W) pendant qu'elle exécute un mouvement de rotation par rapport à la première surface de la pièce à oeuvrer (W),
**caractérisé en ce que** le mouvement de rotation de la surface de palpage (7) par rapport à la première surface de la pièce à oeuvrer (W) a lieu autour d'un axe de rotation qui s'étend essentiellement à angle droit par rapport à la première surface de la pièce à oeuvrer (W).

2. Dispositif palpeur selon la revendication 1, dans lequel la surface de palpage (7) est réalisée au niveau d'une face frontale de la plaque de palpage (6), ladite face frontale étant agencée en fonctionnement sensiblement parallèlement à la première surface de la pièce à oeuvrer (W).

3. Dispositif palpeur selon la revendication 1 ou 2, dans lequel la surface de palpage (7) est réalisée sous forme de surface plane de forme annulaire.

4. Dispositif palpeur selon l'une des revendications précédentes, dans lequel la surface de palpage (7) est pourvue surtout son pourtour d'une pente d'approche (8) sur laquelle monte la pièce à oeuvrer (W) qu'il s'agit de palper.

5. Dispositif palpeur selon l'une des revendications précédentes, dans lequel la surface de palpage (7) est conçue et disposée de telle façon qu'elle est tournée par la force de pressage avec laquelle elle est pressée pendant l'usinage de l'arête contre la première surface de la pièce à oeuvrer (W).

6. Dispositif palpeur selon l'une des revendications précédentes, comprenant en outre des moyens pour palper une seconde surface (O, U), en particulier de la face supérieure, de la pièce à oeuvrer (W) pendant l'usinage de l'arête.

7. Dispositif palpeur selon la revendication 6, qui comprend des moyens pour le palpage sans contact de la seconde surface (O, U) de la pièce à oeuvrer (W) pendant l'usinage de l'arête.

8. Dispositif palpeur selon la revendication 6, dans lequel au moins un élément de palpage prévu pour palper la seconde surface de la pièce à oeuvrer (W) est réalisé sous forme de galet palpeur (5) qui roule sur la seconde surface de la pièce à oeuvrer (W) quand le dispositif palpeur est déplacé le long de la première surface de la pièce à oeuvrer (W).

9. Dispositif palpeur selon la revendication 8, dans lequel un axe de rotation du galet palpeur (5) s'étend parallèlement à l'axe de rotation de la plaque de palpage (6) ; ou dans lequel le galet palpeur (5) et la plaque de palpage (6) sont agencés concentriquement.

10. Unité d'usinage (1) pour l'usinage de pièces à oeuvrer qui sont constituées de préférence au moins partiellement en bois, en matériau à base de bois ou en matière plastique, en particulier pour le fraisage en forme d'arêtes collées dans une machine d'encollage d'arêtes,
dans laquelle l'unité d'usinage (1) est montée déplaçable par rapport à une arête prévue au niveau d'une première surface, en particulier d'une surface latérale, de la pièce à oeuvrer (W), et
dans laquelle l'unité d'usinage (1) comprend un dispositif palpeur selon l'une des revendications précédentes.

11. Unité d'usinage (1) selon la revendication 10, qui comprend en outre au moins un outil (3) pour l'usinage avec enlèvement de matière de l'arête de la pièce à oeuvrer, en particulier un outil de fraisage pour le fraisage en forme de l'arête de la pièce à oeuvrer.

12. Unité d'usinage (1) selon la revendication 11, dans laquelle au moins un outil (3) est en rotation autour d'un axe de rotation qui s'étend parallèlement à l'aise de rotation de la plaque de palpage (6) et/ou parallèlement à l'axe de rotation du galet palpeur (5) ; ou bien dans laquelle au moins un outil (3) est en rotation autour du même axe de rotation que la plaque de palpage (6) et/ou que le galet palpeur (5).

13. Unité d'usinage (1) selon l'une des revendications 10 à 12, laquelle est montée déplaçable de telle façon qu'elle peut contourner totalement la première surface de la pièce à oeuvrer (W) pour l'usinage de l'arête.

14. Unité d'usinage (1) selon l'une des revendications 11 à 13, qui est montée en pivotement dans l'ensemble autour d'un axe (C) qui s'étend parallèlement à l'axe de rotation de l'outil (3).

15. Unité d'usinage (1) selon l'une des revendications 10 à 14, laquelle est capable de se déplacer au moins dans une direction (Z) qui s'étend en fonctionnement perpendiculairement à la seconde surface (O, U) de la pièce à oeuvrer ; et/ou laquelle est capable de se déplacer dans au moins une direction (X, Y) qui s'étend en fonctionnement parallèlement à la seconde surface (O, U) de la pièce à oeuvrer.
